# EUROPEAN PATENT SPECIFICATION

(11) **EP 0 581 818 B1**
(45) Date of publication and mention of the grant of the patent: **29.11.1995**
(21) Application number: 92908984.5
(22) Date of filing: 21.04.1992
(51) Int. Cl.: F01N 3/20

(54) **EXHAUST SYSTEM**
AUSPUFFSYSTEM
SYSTEME D'ECHAPPEMENT

(30) Priority: 20.04.1991 GB 9108511
(43) Date of publication of application: 09.02.1994
(73) Proprietor: FORD-WERKE AKTIENGESELLSCHAFT, 50725 Köln (DE); FORD FRANCE S. A., 92506 Rueil-Malmaison Cédex (FR); FORD MOTOR COMPANY LIMITED, Brentwood, Essex CM13 3BW (GB)
(72) Inventor: MA, Thomas, Tsoi-Hei, Chemsford Essex CM3 5YB (GB)
(74) Representative: Messulam, Alec Moses
(86) International application number: GB9200720
(87) International publication number: WO9218756

(56) References cited:
- WO-A-90/15955
- DE-A- 2 114 981
- DE-A- 3 713 964
- DE-A- 3 826 364
- US-A- 3 144 309
- US-A- 3 972 685

## Description

### Field of the invention

The present invention relates to an exhaust system for an internal combustion engine.

### Background of the invention

The positioning of a catalytic converter in relation to an internal combustion engine exhaust manifold is normally a compromise based on two conflicting requirements. The catalyst must be capable of reaching its light off temperature (typically 350°C) under all running conditions and it should preferably do so as quickly as possible. These requirements dictate that the converter be placed as near as possible to the exhaust ports of the engine. On the other hand, the temperature should not exceed a certain threshold temperature (typically 850°C) beyond which the catalyst suffers damage. Placing a converter close to the exhaust manifold would for this reason endanger the catalyst under high load and high speed conditions when the gas temperature can exceed this limit.

Various proposals have been made in the prior art to mitigate the problems at both end of the temperature scale. To avoid damage to the converter through overheating, it is common for the fuel mixture strength to be increased significantly at high load. This reduces the exhaust gas temperature but ruins fuel economy and aggravates the problem of hydrocarbon emissions.

Placing a converter next to the engine (close coupled) is not always easy to achieve on account of the lack of available space. For this reason, under floor converters have been used in the prior art but they have the problem that they do not reach their light off temperature rapidly and can even drop below the light off temperature during low load conditions. To mitigate this problem, it has been proposed to conserve the heat in the exhaust system by using a double skinned down pipe. In this case the outer jacket serves to improve thermal insulation but if no significant cooling occurs under high load, then the problem of overheating arises.

It has also been proposed to use two catalytic converters, one under floor and the other close coupled, the close coupled converter being by-passed under high load conditions. This requires perfect isolation of the close coupled catalytic converter under high load conditions as any leakage of high temperature gases would still impair its function (DE-A-38 26 364)

### Object of the invention

The present invention seeks to provide an exhaust system for an internal combustion in which the cooling effect of the exhaust system may change with operating conditions in order to improve the speed of lighting off, maintain the catalyst operational under all conditions and avoid overheating under high load.

### Summary of the invention

According to the present invention, there is provided an exhaust system having a down pipe carrying the main exhaust flow, an auxiliary pipe connected in parallel with a section of the down pipe, a catalytic converter arranged in the auxiliary pipe and a valve arranged in the down pipe for closing off the down pipe and causing the main flow of exhaust gases from the engine to pass through the catalytic converter when the valve is closed, characterised by flow diverting means at the connections between the down pipe and the auxiliary pipe operative when the valve in the down pipe is open to induce a proportion of the gases flowing in the main down pipe to recirculate in a closed loop comprising the auxiliary pipe and the section of the down pipe, the flow through the catalytic converter being in the opposite direction to the flow along the section of the down pipe.

### Brief description of the drawings

The invention will now be described further, by way of example, with reference to the accompanying drawings, in which:
Figure 1 is a section through an exhaust system in accordance with the invention, and
Figure 2 is a perspective view of a flow diverting connection used in the exhaust system of Figure 1.

### Detailed description of the preferred embodiments

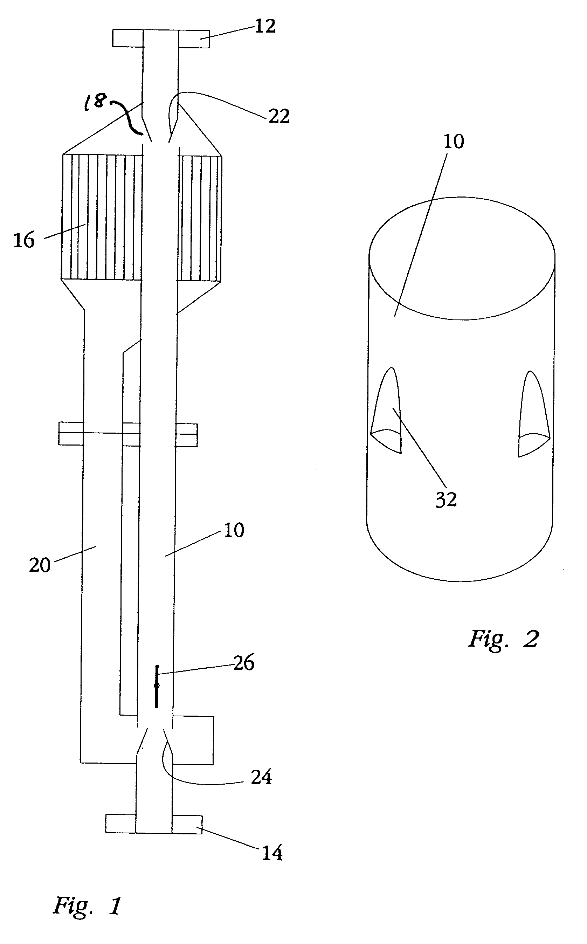

Figure 1 shows a down pipe 10 having connection flanges 12 and 14 securing the down pipe 10 to an engine exhaust manifold and a main under floor catalytic converter respectively. A supplementary close coupled catalytic converter 16 is arranged in an annular passage surrounding the upper end of the down pipe 10. Gases flow into the annular passage from the down pipe 10 at a first connection arranged upstream of the converter 16 and the outlet end of the annular passage is connected via an auxiliary pipe 20 running in parallel with the down pipe 10 to a second connection arranged further downstream. A shut-off valve 26, shown as a butterfly valve, is disposed in the down pipe 10 at a point between the upstream and downstream connections.

When the shut-off valve 26 is closed, the close coupled converter 16 is brought into action and all the exhaust gases pass through it in a forward direction. As the converter 16 is close to the engine manifold, it reaches its light off temperature rapidly and can function correctly even under low load conditions.

When the engine is under high load the shut-off valve 26 is open and the gases can by-pass the close coupled converter 16 by flowing along the down pipe 10 towards the main under floor converter which functions efficiently under such conditions. However, under high load the exhaust temperature can exceed 850°C and there is a risk of damaging the converter 16. Special care must be therefore taken to avoid any gases directly reaching the close coupled converter 16.

In order to achieve this, in the present invention, a flow diverter 22 is provided at the connection 22 lying upstream of the converter 16. The flow diverter 22 is formed by constructing the part of the down pipe 10 at the upstream connection in the special manner illustrated in Figure 2. The down pipe 10 has pockets 32 pressed inwards into it, the pockets being similar in shape to the cutters in a cheese grater with the openings facing downstream. This aerodynamic design diverts the flow of the exhaust gases in the down pipe 10 and causes the boundary layer to break away suddenly from the surface of the down pipe at the downstream facing opening and to rejoin the surface of the down pipe 10 further downstream. The flow past the openings causes entrainment of gases from the passage 18 resulting in a negative pressure above the catalytic converter 16.

The connection downstream of the shut off valve 26 is designed in a similar manner to form a flow diverter 24 having openings facing upstream to act as scoops tending to create a positive pressure in the pipe 20 below the converter 16. Therefore there results a flow along the pipe 20 in the opposite direction to that of the gas flow in the down pipe 10. A proportion of the flow is recirculated, being drawn from the main flow at the downstream connection and rejoining the main flow at the upstream connection after having passed through the pipe 20 and the converter 16. The gas reaching the converter will have travelled the length of the down pipe 10 and the auxiliary pipe 20 and is cooled by heat loss through the walls of these pipes. By the time the gases reach the lower end of the converter 16, their temperature will be below the threshold at which damage can be caused to the catalyst.

In the prior art proposals, the upstream and the downstream connections both needed to be perfectly sealed to avoid the hot exhaust gases reaching the converter 16 directly because even a small flow rate would eventually raise the temperature of the converter 16 beyond safe limits. By contrast, the invention relies on flow taking place at these connections but provides for flow diversion at the connections to create a reverse flow rather than a forward flow through the converter 16. The greater the flow rate of the gases along the down pipe 10, the greater will be the recirculation and the long term reliability of the exhaust system is therefore ensured.

It will be appreciated that alternative designs may be used at the connections, there being numerous configurations that result in boundary layer separation accompanied by entrainment of gases prior to the layer rejoining the tube wall.

## Claims

1. An exhaust system having a down pipe (10) carrying the main exhaust flow, an auxiliary pipe (20) connected in parallel with a section of the down pipe (10), a catalytic converter (16) arranged in the auxiliary pipe (20) and a valve (26) arranged in the down pipe (10) for closing off the down pipe (10) and causing the main flow of exhaust gases from the engine to pass through the catalytic converter (16) when the valve (26) is closed, characterised by flow diverting means (22, 24) at the connections between the down pipe (10) and the auxiliary pipe (20) operative when the valve (26) in the down pipe is open to induce a proportion of the gases flowing in the down pipe (10) to recirculate in a closed loop comprising the auxiliary pipe (20) and the section of the down pipe (10), the flow through the catalytic converter (16) being in the opposite direction to the flow along the section of the down pipe (10).

2. An exhaust system as claimed in claim 1, wherein flow diversion at the upstream connection between the down pipe and the auxiliary pipe is achieved by appropriate design of the geometry at the connection (22) between the two pipes, to create a relative negative pressure in the auxiliary pipe (20) when exhaust gases are flowing along the down pipe (10).

3. An exhaust system as claimed in claim 1 or 2, wherein flow diversion at the downstream connection (24) between the down pipe (10) and the auxiliary pipe (20) is achieved by appropriate design of the geometry at the connection between the two pipes, to create a relative positive pressure in the auxiliary pipe (20) when exhaust gases are flowing along the down pipe (10).

4. An exhaust system as claimed in claim 3, wherein at the connection between the down pipe and the auxiliary pipe, the down pipe wall has pressed in pockets (32) directed upstream or downstream to increase or decrease the pressure at the respective end of the auxiliary pipe.

## Patentansprüche

1. Abgasanlage mit einem Abflußrohr (10), das den Hauptabgasfluß trägt, einem Zusatzrohr (20), das mit einem Abschnitt des Abflußrohrs (10) parallel verbunden ist, einem katalytischen Wandler (16), der in dem Zusatzrohr (20) angeordnet ist und einem Ventil (26), das im Abflußrohr (10) angeordnet ist, um das Abflußrohr (10) zu verschließen und den Hauptfluß der Abgase vom Motor zu veranlassen, den katalytischen Wandler (16) zu durchqueren, wenn das Ventil (26) geschlossen ist, gekennzeichnet durch Flußableitmittel (22, 24) an den Verbindungen zwischen dem Abflußrohr (10) und dem Zusatzrohr (20), welches einsatzfähig ist, wenn das Ventil (26) im Abflußrohr offen ist, um einen Teil der in das Hauptabflußrohr (10) fließenden Gase zu veranlassen, nochmals in einer geschlossenen Schleife zu zirkulieren, einschließlich des Zusatzrohrs (20) und des Abschnitts des Abflußrohrs (10), wobei der Fluß durch den katalytischen Wandler (16) in entgegengesetzter Richtung zum Fluß entlang des Abschnitts des Abflußrohres (10) erfolgt.

2. Abgasanlage nach Anspruch 1, bei welcher die Flußumleitung an der stromaufwärtigen Verbindung zwischen dem Abflußrohr und dem Zusatzrohr durch geeignete Konstruktion der Geometrie an der Verbindung (22) zwischen den beiden Rohren erreicht wird, um einen jeweiligen Unterdruck im Zusatzrohr (20) zu erzeugen, wenn die Abgase das Abflußrohr (10) entlang fließen.

3. Abgasanlage nach Anspruch 1 oder 2, bei welcher die Flußumleitung an der stromabwärtigen Verbindung (24) zwischen dem Abflußrohr (10) und dem Zusatzrohr (20) durch geeignete Konstruktion der Geometrie an der Verbindung zwischen den beiden Rohren erreicht wird, um einen jeweiligen positiven Druck im Zusatzrohr (20) zu erzeugen, wenn die Abgase das Abflußrohr (10) entlang fließen.

4. Abgasanlage nach Anspruch 3, bei welcher die Wand des Abflußrohres an der Verbindung zwischen den Abflußrohr und dem Zusatzrohr eingedrückte Taschen (32) hat, die stromaufwärts oder stromabwärts gerichtet sind, um den Druck am jeweiligen Ende des Zusatzrohres zu erhöhen oder zu vermindern.

## Revendications

1. Système d'échappement comportant une tuyauterie d'échappement (10) canalisant le flux d'échappement principal, un tuyau auxiliaire (20) relié en parallèle à une section de la tuyauterie d'échappement (10), un pot catalytique (16) disposé dans le tuyau auxiliaire (20) et une soupape (26) disposée dans la tuyauterie d'échappement (10) pour obturer la tuyauterie d'échappement (10) et amener le flux principal des gaz d'échappement provenant du moteur à traverser le pot catalytique (16) lorsque la soupape (26) est fermée, caractérisé par des moyens de déviation du flux (22, 24) au niveau des raccordements entre la tuyauterie d'échappement (10) et le tuyau auxiliaire (20) agissant lorsque la soupape (26) dans la tuyauterie d'échappement est ouverte pour amener une partie des gaz circulant dans la tuyauterie d'échappement (10) à recirculer dans une boucle fermée comprenant le tuyau auxiliaire (20) et la section de la tuyauterie d'échappement (10), l'écoulement à travers le pot catalytique (16) se faisant dans la direction opposée à l'écoulement le long de la section de la tuyauterie d'échappement (10).

2. Système d'échappement selon la revendication 1, dans lequel la déviation du flux au niveau du raccordement amont entre la tuyauterie d'échappement et le tuyau auxiliaire est réalisée par une conception appropriée de la géométrie au niveau du raccordement (22) entre ces deux conduites, afin de créer une pression relative négative dans le tuyau auxiliaire (20) lorsque des gaz d'échappement s'écoulent le long de la tuyauterie d'échappement (10).

3. Système d'échappement selon la revendication 1 ou 2, dans lequel la déviation du flux au niveau du raccordement aval (24) entre la tuyauterie d'échappement (10) et le tuyau auxiliaire (20) est réalisée par une conception appropriée de la géométrie au niveau du raccordement entre les deux conduites, afin de créer une pression relative positive dans le tuyau auxiliaire (20) lorsque des gaz d'échappement s'écoulent le long de la tuyauterie d'échappement (10).

4. Système d'échappement selon la revendication 3, dans lequel au niveau du raccordement entre la tuyauterie d'échappement et le tuyau auxiliaire, la paroi de la tuyauterie d'échappement comporte des poches embouties (32) dirigées vers l'amont ou l'aval afin d'augmenter ou de diminuer la pression au niveau de l'extrémité respective du tuyau auxiliaire.
